# EUROPEAN PATENT APPLICATION

(11) **EP 4 844 816 A1**
(43) Date of publication of application: **25.11.2026**
(21) Application number: 26173380.2
(22) Date of filing: 20.04.2026
(51) Int. Cl.: H01M 4/04, H01M 4/36, H01M 4/62, H01M 4/505, H01M 4/525, H01M 4/1391, H01M 10/0525

(54) **METHOD OF PRODUCING POSITIVE ELECTRODE SLURRY AND POSITIVE ELECTRODE PLATE**

(30) Priority: 19.05.2025 JP 2025083095
(71) Applicant: Prime Planet Energy & Solutions, Inc., Chuo-ku, Tokyo 103-0022 (JP)
(72) Inventor: TOCHIGI, Shota, Tokyo,, 103-0022 (JP)
(74) Representative: Kuhnen & Wacker Patent- und Rechtsanwaltsbüro PartG mbB

(57) **Abstract**

A method of producing a positive electrode slurry comprises (a) kneading a first positive electrode active material specified by the claims, a first binder, and a first dispersion medium to obtain a first kneaded product, (b) kneading the first kneaded product and a first conductive material to obtain a second kneaded product, and (c) kneading a second positive electrode active material specified by the claims, a second binder, and a second dispersion medium to obtain a third kneaded product, and the method further comprises either [i] (d) kneading the second kneaded product, the third kneaded product, and a second conductive material, or [ii] (e) kneading the third kneaded product and the second conductive material to obtain a fourth kneaded product and (f) kneading the second kneaded product and the fourth kneaded product.

## Description

### CROSS REFERENCE TO RELATED APPLICATIONS

This nonprovisional application is based on Japanese Patent Application No. 2025-083095 filed on May 19, 2025, with the Japan Patent Office, the entire contents of which are hereby incorporated by reference.

### BACKGROUND OF THE INVENTION

### Field of the Invention

The present disclosure relates to a method of producing a positive electrode slurry, as well as a positive electrode plate.

### Description of the Background Art

A positive electrode plate of a secondary battery has a positive electrode active material layer that includes a positive electrode active material. As the positive electrode active material, single particles as well as aggregate particles each consisting of a large number of primary particles aggregated together are known to be used (for example, Japanese Patent Laying-Open No. 2022-143761).

### SUMMARY OF THE INVENTION

In the case where the positive electrode plate has a positive electrode active material layer formed by mixing single particles and aggregate particles, capacity retention of the secondary battery can be degraded during usage.

The present disclosure aims at providing a method of producing a positive electrode slurry, as well as a positive electrode plate, each of which is capable of enhancing capacity retention of a secondary battery.
[1] A method of producing a positive electrode slurry for a non-aqueous electrolyte secondary battery, wherein
   the positive electrode slurry includes lithium composite oxide particles as a first positive electrode active material and lithium composite oxide particles as a second positive electrode active material,
   the first positive electrode active material is in a form of secondary particles each consisting of 50 or more primary particles aggregated together,
   the second positive electrode active material is in a form of single particles, or in a form of secondary particles each consisting of 2 to 10 primary particles aggregated together,
   the method comprising:
      (a) kneading the first positive electrode active material, a first binder, and a first dispersion medium to obtain a first kneaded product;
      (b) kneading the first kneaded product and a first conductive material to obtain a second kneaded product;
      (c) kneading the second positive electrode active material, a second binder, and a second dispersion medium to obtain a third kneaded product; and
         either [i] or [ii] below:
         [i] (d) kneading the second kneaded product, the third kneaded product, and a second conductive material; or
         [ii] (e) kneading the third kneaded product and the second conductive material to obtain a fourth kneaded product and (f) kneading the second kneaded product and the fourth kneaded product, and
   in the method, the first conductive material and the second conductive material are mixed in a weight ratio of (the first conductive material):(the second conductive material)=45:55 to 65:35.
[2] The method of producing a positive electrode slurry according to [1], wherein in the method, the first positive electrode active material and the second positive electrode active material are mixed in a weight ratio of (the first positive electrode active material):(the second positive electrode active material)=70:30 to 30:70.
[3] The method of producing a positive electrode slurry according to [1] or [2], wherein an average particle size (D50) of the first positive electrode active material is more than an average particle size (D50) of the second positive electrode active material.
[4] The method of producing a positive electrode slurry according to any one of [1] to [3], wherein each of the first positive electrode active material and the second positive electrode active material is independently a lithium composite oxide represented by a formula (I) below:

   Li_{1.00+a1}Niₓ₁Me_{1.00-x1}O₂ (I)

   where
   a1 and x1 satisfy relationships of -0.30≤a1≤0.30 and 0.30≤x1≤1.00, respectively; and
   Me represents one or more selected from the group consisting of Co, Mn, Al, Zr, B, Mg, Fe, Cu, Zn, Sn, Na, K, Ba, Sr, Ca, W, Mo, Nb, Ti, Si, V, Cr, and Ge.
[5] A positive electrode plate comprising:
   a positive electrode current collector; and
   a positive electrode active material layer, wherein
   the positive electrode active material layer includes a first positive electrode active material, a second positive electrode active material, a conductive material, and a binder,
   each of the first positive electrode active material and the second positive electrode active material is lithium composite oxide particles,
   the first positive electrode active material is in a form of secondary particles each consisting of 50 or more primary particles aggregated together,
   the second positive electrode active material is in a form of single particles, or in a form of secondary particles each consisting of 2 to 10 primary particles aggregated together, and
   in a cross section of the positive electrode active material layer, a contact rate (CCR1) between the first positive electrode active material and the conductive material and a contact rate (CCR2) between the second positive electrode active material and the conductive material satisfy a relationship of an expression (1) below. $0.43 \leq CCR 2 / CCR 1 \leq 0.70$ (1)
[6] The positive electrode plate according to [5], wherein the contact rate (CCR1) is from 0.49 to 0.65.
[7] The positive electrode plate according to [5] or [6], wherein the contact rate (CCR2) is from 0.28 to 0.35.
[8] The positive electrode plate according to any one of [5] to [7], wherein the positive electrode active material layer includes the first positive electrode active material and the second positive electrode active material in a weight ratio of (the first positive electrode active material):(the second positive electrode active material)=70:30 to 30:70.
[9] The positive electrode plate according to any one of [5] to [8], wherein an average particle size (D50) of the first positive electrode active material is more than an average particle size (D50) of the second positive electrode active material.
[10] The positive electrode plate according to any one of [5] to [9], wherein the positive electrode active material layer includes the first positive electrode active material, the second positive electrode active material, the conductive material, and the binder in a weight ratio of (the first positive electrode active material)+(the second positive electrode active material):(the conductive material):(the binder)=(99.9 to 95.0):(0.05 to 2.00):(0.05 to 3.00).
[11] The positive electrode plate according to any one of [5] to [10], wherein each of the first positive electrode active material and the second positive electrode active material is independently a lithium composite oxide represented by a formula (I) below:

   Li_{1.00+a1}Niₓ₁Me_{1.00-x1}O₂ (I)

   where
   a1 and x1 satisfy relationships of -0.30≤a1≤0.30 and 0.30≤x1≤1.00, respectively; and
   Me represents one or more selected from the group consisting of Co, Mn, Al, Zr, B, Mg, Fe, Cu, Zn, Sn, Na, K, Ba, Sr, Ca, W, Mo, Nb, Ti, Si, V, Cr, and Ge.

The foregoing and other objects, features, aspects and advantages of the present invention, when taken in conjunction with the accompanying drawings will become more apparent from the following detailed description of the present invention.

### BRIEF DESCRIPTION OF THE DRAWINGS

Fig. 1 is a flowchart illustrating the procedure for producing a positive electrode slurry according to an embodiment.
Fig. 2 is a flowchart illustrating the procedure for producing a positive electrode slurry according to another embodiment.

### DESCRIPTION OF THE PREFERRED EMBODIMENTS

Herein, a numerical range such as "(from) m to n" includes the upper limit and the lower limit, unless otherwise specified. That is, "(from) m to n" means a numerical range of "not less than m and not more than n". Any numerical value selected from a certain numerical range may be used as a new upper limit or a new lower limit. For example, any numerical value from a certain numerical range may be combined with any numerical value described in another location of the present specification or in a table or a drawing to set a new numerical range.

### (Method of Producing Positive Electrode Slurry)

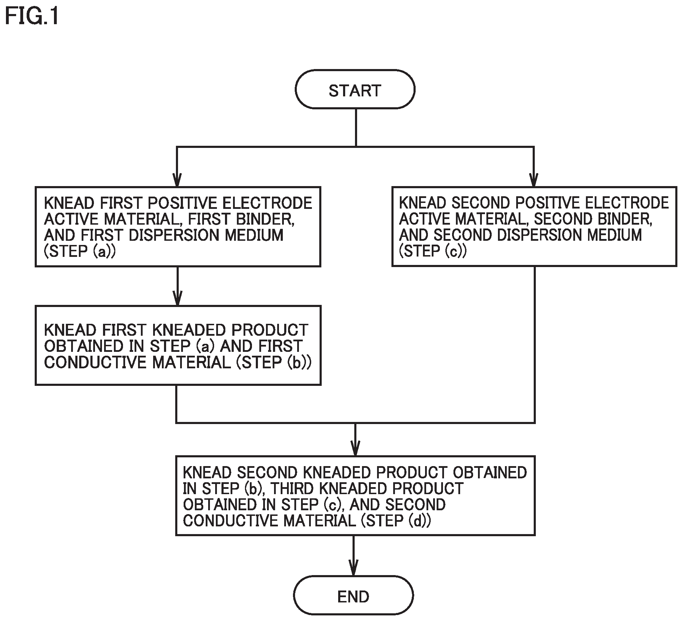

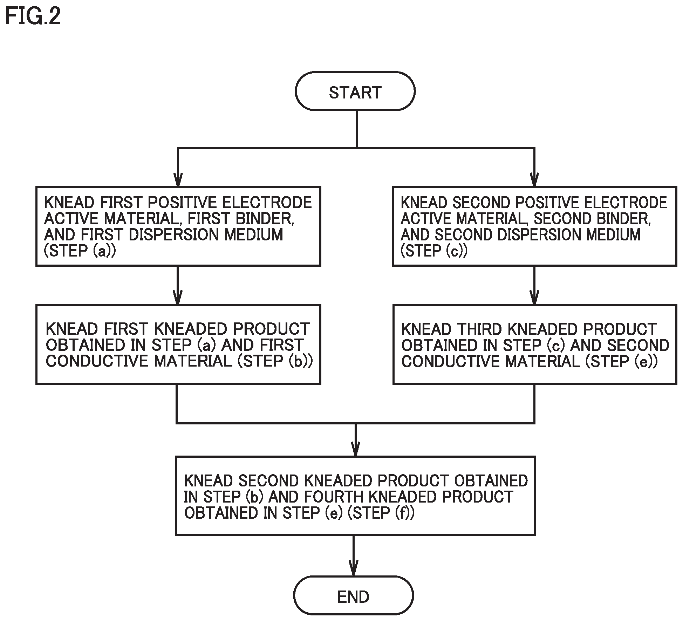

Each of Fig. 1 and Fig. 2 is a flowchart illustrating the procedure for producing a positive electrode slurry according to an embodiment. By a method of producing a positive electrode slurry according to the present embodiment (hereinafter also referred to as "the present slurry"), the present slurry is produced, and the present slurry can be used for forming a positive electrode active material layer of a positive electrode plate of a non-aqueous electrolyte secondary battery (hereinafter also referred to as "a secondary battery") such as a lithium-ion battery. The positive electrode plate may be the present positive electrode plate which is to be described below.

The present slurry includes a first positive electrode active material (hereinafter also referred to as "a first active material") and a second positive electrode active material (hereinafter also referred to as "a second active material"). In addition to the first active material and the second active material, the present slurry can also include a first binder, a second binder, a first conductive material, a second conductive material, a first dispersion medium, and a second dispersion medium.

The solid concentration of the present slurry is from 40 to 85 weight%, for example, and it may be from 45 to 83 weight%, or from 50 to 80 weight%. The solid matter refers to components included in the present slurry other than the dispersion medium.

Each of the first active material and the second active material is lithium composite oxide particles. The lithium composite oxide can be an oxide including lithium and a metallic element except lithium, and, for example, it can have a composition described below. The first active material is in the form of secondary particles each consisting of 50 or more primary particles aggregated together. The second active material is in the form of single particles, or in the form of secondary particles each consisting of 2 to 10 primary particles aggregated together.

Referring to Fig. 1 and Fig. 2, the method of producing the present slurry comprises:
(a) kneading the first active material, a first binder, and a first dispersion medium to obtain a first kneaded product (hereinafter also referred to as "a step (a)");
(b) kneading the first kneaded product and a first conductive material to obtain a second kneaded product (hereinafter also referred to as "a step (b)");
(c) kneading the second active material, a second binder, and a second dispersion medium to obtain a third kneaded product (hereinafter also referred to as "a step (c)"); and
   either [i] or [ii] below:
   [i] (d) kneading the second kneaded product, the third kneaded product, and a second conductive material (hereinafter also referred to as "a step (d)") (Fig. 1); or
   [ii] (e) kneading the third kneaded product and a second conductive material to obtain a fourth kneaded product (hereinafter also referred to as "a step (e)") and (f) kneading the second kneaded product and the fourth kneaded product (hereinafter also referred to as "a step (f)") (Fig. 2).

In the production method, the first conductive material and the second conductive material are mixed in a weight ratio of (first conductive material):(second conductive material)=45:55 to 65:35. This ratio is the ratio between the weight of the first conductive material used in the kneading in the step (b) and the weight of the second conductive material used in the kneading in the step (d) or the step (e).

In each of the step (b), the step (d), the step (e), and the step (f), a dispersion medium may be added to and kneaded with the above-mentioned component(s).

As charge and discharge of the secondary battery proceed, the positive electrode active material in the positive electrode plate expands and shrinks. The first active material is in the form of secondary particles each consisting of many primary particles aggregated together, and as a result, due to the expansion and shrinkage of the first active material, grain boundaries between the secondary particles tend to break. In the method of producing the present slurry, with reference to Fig. 1 and Fig. 2, in the step (b), the first kneaded product including the first active material and the first binder is kneaded with the first conductive material. As a result of the kneading in the step (b), the area of contact between the first active material and the first conductive material can be increased. Consequently, conductive paths can be ensured by the first conductive material even when the first active material breaks due to charge and discharge of the secondary battery, and thereby electrical isolation of the first active material in the positive electrode active material layer can be reduced.

Referring to Fig. 1 and Fig. 2, in the method of producing the present slurry, the third kneaded product including the second active material and the second binder is kneaded with the second conductive material in the step (d) or the step (e), where the ratio of the amount of the second conductive material added in these steps to the amount of the first conductive material added in the step (b) is adjusted to fall within the above-mentioned range. As a result of the kneading in the step (d) or the step (e), the area of contact between the second active material and the second conductive material can be ensured and conductive paths in the vicinity of the second active material can be also ensured.

As described above, in a positive electrode active material layer formed with the use of the present slurry, conductive paths in the positive electrode active material layer can be ensured even when charge and discharge of the secondary battery are repeated, and, therefore, in a secondary battery having a positive electrode plate obtained with the use of the present slurry, capacity retention can be enhanced.

In order to ensure conductive paths in the positive electrode active material layer, it is possible to increase the total content of the first conductive material and the second conductive material in the positive electrode active material layer to a great extent. In this case, there is a possibility that the total electronic conductivity of the positive electrode plate can excessively increase and a large amount of heat can be produced at the time of a short circuit of the secondary battery. In the method of producing the present slurry, instead of increasing the total content of the first conductive material and the second conductive material, by adjusting the timing to add the first conductive material and the second conductive material as well as the amount of them to add, it is possible to ensure conductive paths in the positive electrode active material layer. By using the present slurry to obtain a positive electrode plate without greatly increasing the total content of the first conductive material and the second conductive material, it is possible to inhibit an excessive increase of the total electronic conductivity of the positive electrode plate to reduce the amount of heat produced at the time of a short circuit of the secondary battery.

In the first active material, the number of primary particles aggregated together to form each secondary particle is 50 or more, and it may be 100 or more, or 1000 or more; and it is usually 5×10⁶ or less, and it may be 5×10⁵ or less. When the second active material is in the form of secondary particles, the number of primary particles aggregated together to form each secondary particle is from 2 to 10, and it may be from 2 to 8, or from 2 to 5, or from 3 to 5.

Herein, the number of primary particles aggregated together to form each of the secondary particles can be checked in an SEM image obtained with a scanning electron microscope (hereinafter also referred to as "SEM"), for example. Specifically, the following procedure can be adopted. Firstly, based on the assumption that the secondary particles are spheres and the average particle size (D50) (described below) of the secondary particles is the diameter of the secondary particles, the volume of the secondary particles is calculated. Subsequently, the surface of each secondary particle is examined with an SEM under a magnification of 5000 times to obtain a surface SEM image. By image analysis of the surface SEM image, the contour of each primary particle is identified, and the number of primary particles in the surface SEM image is determined. The area of the region in the surface SEM image occupied by primary particles is divided by the number of the primary particles in the surface SEM image to calculate the average area of the primary particles. Then, a cross section of the secondary particle is examined with an SEM under a magnification of 5000 times to obtain a cross-sectional SEM image, and by image analysis of the cross-sectional SEM image, the contour of each primary particle is identified, and the length of the primary particle in a radial direction of the secondary particle is measured for calculating the average height of the primary particles. The product of the average area and the average height obtained for the primary particles is calculated as the average volume of the primary particles. The volume of the secondary particle calculated in the above manner is divided by the average volume of the primary particles, namely (the volume of the secondary particle/the average volume of the primary particles) to calculate the number of primary particles aggregated together to form the secondary particle. The above-mentioned image analysis can be carried out by using image analysis software "ImageJ" (ver. 1.54g), for example.

The average particle size (D50) of the first active material is preferably more than the average particle size (D50) of the second active material. The D50 of the first active material is from 5 to 20 µm, for example; it may be from 10 to 19 µm, and preferably it is from 15 to 18 µm. The D50 of the second active material is from 0.5 to 10.0 µm, for example; it may be from 1.0 to 7.0 µm, and preferably it is from 3.5 to 4.5 µm. Herein, the average particle size (D50) refers to a particle size in volume-based particle size distribution at which cumulative frequency of particle sizes accumulated from the small size side reaches 50%. The volume-based particle size distribution can be obtained by measurement with a laser-diffraction particle size distribution analyzer.

In the method of producing the present slurry, the mixing ratio between the first active material and the second active material, namely (first active material):(second active material) in weight, is preferably from 70:30 to 30:70, and it may be from 60:40 to 40:60, or from 55:45 to 45:55. This weight ratio is the ratio between the weight of the first active material used in the kneading in the step (a) and the weight of the second active material used in the kneading in the step (c).

The total content of the first active material and the second active material in the present slurry relative to the solid content in the present slurry may be from 95.0 to 99.9 weight%, or from 96.0 to 99.5 weight%, or from 97.0 to 99.2 weight%, or from 97.5 to 99.0 weight%, or from 98.0 to 98.5 weight%.

Each of the first active material and the second active material may independently include one or more lithium composite oxides selected from the group consisting of LiCoO₂, LiNiO₂, LiMnO₂, LiMn₂O₄, Li(NiCoMn)O₂, Li(NiCoAl)O₂, and LiFePO₄. Here, in a composition formula such as "Li(NiCoMn)O₂", for example, the constituents within the parentheses are collectively regarded as a single unit in the entire composition ratio (Ni+Co+Mn=1). As long as the constituents within the parentheses are collectively regarded as a single unit, the amounts of the individual elements (Ni, Co, Mn) are not particularly limited.

For example, each of the first active material and the second active material may be independently a lithium composite oxide represented by a formula (I) below:

Li_{1.00+a1}Niₓ₁Me_{1.00-x1}O₂ (I)

[in the formula (I),
a1 and x1 satisfy relationships of -0.30≤a1≤0.30 and 0.30≤x1≤1.00, respectively; and
Me represents one or more selected from the group consisting of Co (cobalt), Mn (manganese), Al (aluminum), Zr (zirconium), B (boron), Mg (magnesium), Fe (iron), Cu (copper), Zn (zinc), Sn (tin), Na (sodium), K (potassium), Ba (barium), Sr (strontium), Ca (calcium), W (tungsten), Mo (molybdenum), Nb (niobium), Ti (titanium), Si (silicon), V (vanadium), Cr (chromium), and Ge (germanium)].
a1 may be from -0.30 to 0.30, or from -0.20 to 0.20, or from -0.10 to 0.10. x1 may be from 0.30 to 1.00, or from 0.40 to 0.95, or from 0.45 to 0.90, or from 0.50 to 0.85. Me preferably includes Co and Mn.

The lithium composite oxide particles constituting the first active material and the lithium composite oxide particles constituting the second active material may be independently, for example, a lithium composite oxide represented by a formula (II) below:

Li_{1.00+a2}Niₓ₂CO_{y2}Mn_{1.00-x2-y2}O₂ (II)

[in the formula (II),
a2, x2, and y2 satisfy relationships of -0.30≤a2≤0.30, 0.40≤x2≤0.95, 0.00≤y2≤0.60, and x2+Y2≤1.00].
a2 may be from -0.30 to 0.30, or from -0.20 to 0.20, or from -0.10 to 0.10. x2 may be from 0.45 to 0.90, or from 0.50 to 0.85. y2 may be more than 0.00 and not more than 0.45, or from 0.05 to 0.40, or from 0.10 to 0.35, or from 0.15 to 0.30.

The composition of the first active material in the present slurry and the composition of the second active material in the present slurry may be the same as or different from each other. The composition of the first active material and the second active material can be determined by ICP (high-frequency Inductively Coupled Plasma) atomic emission spectroscopy (ICP-AES).

Each of the first conductive material and the second conductive material can be independently one or more selected from the group consisting of carbon black (CB) such as acetylene black (AB), graphite, and fibrous carbon. Examples of the fibrous carbon include carbon nanotubes (CNTs). The CNTs may be single-walled carbon nanotubes (SWCNTs), or may be multi-walled carbon nanotubes such as double-walled carbon nanotubes (DWCNTs). At the time when the first conductive material and the second conductive material are kneaded with other components, each of the first conductive material and the second conductive material may be used as it is, or a dispersion made by dispersing the first conductive material or the second conductive material in a dispersion medium may be used. The dispersion medium may be a dispersion medium mentioned below in the description of the first dispersion medium and the second dispersion medium. Preferably, the dispersion medium is N-methyl-2-pyrrolidone (NMP). The first conductive material in the present slurry and the second conductive material in the present slurry may be the same conductive material, or may be different conductive materials.

In the method of producing the present slurry, the mixing ratio between the first conductive material and the second conductive material, namely (first conductive material):(second conductive material) in weight, is from 45:55 to 65:35, and it may be from 47:53 to 63:37, or from 50:50 to 60:40. When the mixing ratio is within the above-mentioned range, the area of contact between the first active material and the first conductive material as well as the area of contact between the second active material and the second conductive material can be ensured, and conductive paths in the vicinity of each of the first active material and the second active material can be ensured. As a result, in a secondary battery having a positive electrode plate obtained by using the present slurry, capacity retention can be enhanced.

The total content of the first conductive material and the second conductive material used in the method of producing the present slurry relative to the solid content of the present slurry may be from 0.05 to 2.00 weight%, or from 0.10 to 1.50 weight%, or from 0.20 to 1.05 weight%, or from 0.30 to 1.00 weight%, or from 0.50 to 0.95 weight%. When this total content is increased, the total electronic conductivity of the positive electrode plate is excessively enhanced and thereby more heat is produced at the time of a short circuit of the secondary battery; for this reason, the upper limit to the total content is preferably 1.00 weight% or less.

The total weight of the first conductive material and the second conductive material relative to the total weight of the conductive material in the present slurry is preferably from 95 to 100 weight%, and it may be from 97 to 100 weight%, or may be from 99 to 100 weight%, or may be 100 weight%.

Each of the first binder and the second binder may be independently one or more selected from the group consisting of fluororesins such as polyvinylidene difluoride (PVdF), poly(vinylidenefluoride-co-hexafluoropropylene) (PVdF-HFP), and polytetrafluoroethylene (PTFE); cellulose-based resins such as carboxymethylcellulose (CMC), methylcellulose, and hydroxypropylcellulose; styrene-butadiene rubber (SBR); acrylic resins such as polyacrylic acid (PAA); and the like. Each of the first binder and the second binder is preferably a fluororesin, more preferably PVdF. The first binder in the present slurry and the second binder in the present slurry may be the same binder, or may be different binders.

In the method of producing the present slurry, the mixing ratio between the first binder and the second binder, namely (first binder):(second binder) in weight, is from 30:70 to 80:20, and it may be from 35:65 to 75:25, or from 40:60 to 70:30, or from 45:55 to 65:35, or from 50:50 to 60:40. When the mixing ratio is within the above-mentioned range, the area of contact between the first active material and the first conductive material as well as the area of contact between the second active material and the second conductive material tend to be ensured. Preferably, the range of the mixing ratio between the first binder and the second binder is the same as the range of the mixing ratio between the first conductive material and the second conductive material.

The total content of the first binder and the second binder used in the method of producing the present slurry relative to the solid content of the present slurry may be from 0.05 to 3.00 weight%, or from 0.10 to 2.50 weight%, or from 0.20 to 2.00 weight%, or from 0.30 to 1.50 weight%, or from 0.50 to 1.00 weight%. The total content of the first binder and the second binder may be in the range of the total content of the first conductive material and the second conductive material minus 10 weight% to this total content plus 10 weight%.

Each of the first dispersion medium, the second dispersion medium, and a dispersion medium that may be added in the step (b) and the steps (d) to (f) (hereinafter also referred to as "a third dispersion medium") is also referred to as a solvent. Each of the first dispersion medium, the second dispersion medium, and the third dispersion medium may be independently one or more selected from the group consisting of N-methyl-2-pyrrolidone (NMP), tetrahydrofuran (THF), dimethylformamide (DMF), methyl ethyl ketone (MEK), and dimethyl sulfoxide (DMSO). Preferably, each of the first dispersion medium, the second dispersion medium, and the third dispersion medium is NMP. The first dispersion medium, the second dispersion medium, and the third dispersion medium in the present slurry may be the same dispersion medium, or may be different dispersion media.

In the step (a), the first active material, the first binder, and the first dispersion medium are kneaded (Fig. 1 and Fig. 2). For example, in the step (a), the first dispersion medium may be added to the mixture of the first active material and the first binder and kneaded to obtain the first kneaded product. In the step (a), it is preferable that the first binder be added in an amount of 30 to 80 weight% relative to the total weight of the first binder and the second binder included in the positive electrode active material layer to be formed with the use of the present slurry. Preferably, the amount of the first binder added in the step (a) is in the range of the amount of the first conductive material added in the step (b) minus 10 weight% to this amount plus 10 weight%.

The step (b) can be implemented subsequent to the step (a) (Fig. 1 and Fig. 2). In the step (b), the first conductive material is added to the first kneaded product obtained in the step (a), and kneaded, to obtain the second kneaded product. In the step (b), it is preferable that besides the first conductive material, a dispersion medium be also added to the first kneaded product and kneaded. In the step (b), the first conductive material is added in an amount of 45 to 65 weight% relative to the total weight of the first conductive material and the second conductive material included in the positive electrode active material layer to be formed with the use of the present slurry. The amount of the first conductive material to be added may be from 47 to 63 weight%, or from 50 to 60 weight%. When the first binder and the first conductive material are added in the amounts mentioned above in the description of the step (a) and the step (b), the first active material and the first conductive material tend to be properly bonded in the step (b).

In the step (c), the second active material, the second binder, and the second dispersion medium are kneaded (Fig. 1 and Fig. 2). In the step (c), for example, the second dispersion medium may be added to the mixture of the second active material and the second binder, and kneaded, to obtain the third kneaded product. The step (c) can be implemented independently of the step (a) and the step (b), and, for example, it may be implemented in parallel to the step (a) and/or the step (b), or it may be implemented before or after the step (a) and/or the step (b). In the step (c), it is preferable that the second binder be added in an amount of 20 to 70 weight% relative to the total weight of the first binder and the second binder included in the positive electrode active material layer. Preferably, the amount of the second binder added in the step (c) is in the range of the amount of the second conductive material added in the step (d) or the step (e) minus 10 weight% to this amount plus 10 weight%.

The step (d) can be implemented after the step (b) and the step (c) (Fig. 1). In the step (d), the second kneaded product obtained in the step (b), the third kneaded product obtained in the step (c), and the second conductive material are kneaded. In the step (d), it is preferable that besides the second kneaded product, the third kneaded product, and the second conductive material, a dispersion medium be also added and kneaded. In the step (d), the second conductive material is added in an amount of 35 to 55 weight% relative to the total weight of the first conductive material and the second conductive material to be contained in the positive electrode active material layer. The amount of the second conductive material to be added may be from 37 to 53 weight%, or from 40 to 50 weight%. When the second binder and the second conductive material are added in the amounts mentioned above in the description of the step (c) and the step (d), the second active material and the second conductive material tend to be properly bonded in the step (d).

The step (e) can be implemented subsequent to the step (c) (Fig. 2). In the step (e), the second conductive material is added to the third kneaded product obtained in the step (c), and kneaded, to obtain the fourth kneaded product. In the step (e), it is preferable that besides the second conductive material, a dispersion medium be also added to the third kneaded product and kneaded. The amount (the addition amount) of the second conductive material added in the step (e) may be within the same range as that of the addition amount of the second conductive material mentioned above in the description of the step (d). When the second binder and the second conductive material are added in the amounts mentioned above in the description of the step (c) and the step (e), the second active material and the second conductive material tend to be properly bonded in the step (e).

The step (f) can be implemented after the step (b) and the step (e) (Fig. 2). In the step (f), the second kneaded product obtained in the step (b) and the fourth kneaded product obtained in the step (e) are kneaded.

The kneading in the step (a) to the step (f) can be carried out with the use of a stirring apparatus. As the stirring apparatus, a known apparatus can be used without limitation, and, for example, a stirrer equipped with a rotating blade, a planetary mixer, a filmixer, a media agitation mill, a twin-screw kneader, and/or the like can be used. The kneading in the step (a) to the step (f) may be carried out so that the components are properly mixed, and the amount of the kneading load and the kneading time may be adjusted to be suitable for the size, type, and/or the like of the stirring apparatus.

The kneaded product obtained in the step (d) or the step (f) may be used as the present slurry. The method of producing the present slurry may further have a step to add and knead a dispersion medium and/or the like to the kneaded product obtained in the step (d) or the step (f). The kneaded product obtained in this step may be used as the present slurry.

### (Positive Electrode Plate)

A positive electrode plate according to the present embodiment (hereinafter also referred to as "the present positive electrode plate") can be used in a secondary battery. The present positive electrode plate has a positive electrode current collector and a positive electrode active material layer (hereinafter also referred to as "an active material layer"). The active material layer can be formed on one side or both sides of the positive electrode current collector.

The active material layer of the present positive electrode plate includes the first active material (the first positive electrode active material), the second active material (the second positive electrode active material), a conductive material, and a binder. Each of the first active material and the second active material is lithium composite oxide particles. The first active material is in the form of secondary particles each consisting of 50 or more primary particles aggregated together. The second active material is in the form of single particles, or in the form of secondary particles each consisting of 2 to 10 primary particles aggregated together.

In a cross section of the active material layer of the present positive electrode plate, a contact rate (CCR1) between the first active material and the conductive material and a contact rate (CCR2) between the second active material and the conductive material satisfy the relationship of an expression (1) below. $0.43 \leq CCR 2 / CCR 1 \leq 0.70$ (1)

As mentioned above, as charge and discharge of the secondary battery proceed, the positive electrode active material in the positive electrode plate expands and shrinks. The first active material is in the form of secondary particles each consisting of many primary particles aggregated together, and as a result, due to the expansion and shrinkage of the first active material, breakage tends to occur. In the active material layer of the present positive electrode plate, as seen in the relationship of the expression (1), the proportion of the conductive material in contact with the first active material and the proportion of the conductive material in contact with the second active material are adjusted. As a result, conductive paths in the vicinity of the first active material as well as conductive paths in the vicinity of the second active material can be ensured. Consequently, even when the first active material breaks due to charge and discharge of the secondary battery, conductive paths can be ensured by the conductive material, and also conductive paths in the vicinity of the second active material can be ensured by the conductive material, and thereby capacity retention of the secondary battery having the present positive electrode plate can be enhanced.

As mentioned above, in the present positive electrode plate, the state of distribution of the conductive material in the active material layer is adjusted in order to ensure conductive paths in the active material layer. When the content of the conductive material in the active material layer is increased to a great extent, the total electronic conductivity of the positive electrode plate is excessively increased and more heat is produced at the time of a short circuit of the secondary battery. By obtaining the present positive electrode plate without greatly increasing the content of the conductive material, it is possible to inhibit an excessive increase of the total electronic conductivity of the positive electrode plate to reduce the amount of heat produced at the time of a short circuit of the secondary battery.

The ratio (CCR1/CCR2) of the contact rate (CCR1) to the contact rate (CCR2) in a cross section of the active material layer is from 0.43 to 0.70, and it may be from 0.43 to 0.69, or from 0.44 to 0.68, or from 0.45 to 0.65, or from 0.46 to 0.60, or from 0.47 to 0.58, or from 0.48 to 0.55.

The contact rate (CCR1) is preferably from 0.50 to 0.65, and it may be from 0.52 to 0.64, or from 0.53 to 0.63. The contact rate (CCR2) is preferably from 0.28 to 0.34, and it may be from 0.29 to 0.33, or from 0.29 to 0.32.

The contact rate (CCR1) and the contact rate (CCR2) can be determined by the procedure described below. Firstly, a comparison is made between an SEM image of a cross section of the positive electrode active material obtained with a scanning electron microscope (SEM) and resistance distribution based on the spreading resistance in the cross section obtained with a scanning spreading resistance microscope (SSRM), to differentiate the regions of the first active material, the second active material, the conductive material, and pores in the SEM image. In the SEM image where the respective regions are differentiated, the contact rate between the first active material and the conductive material, as well as the contact rate between the second active material and the conductive material are calculated. The detailed procedure for determining the contact rate (CCR1) and the contact rate (CCR2) is described below in the Examples section.

The contact rate (CCR1) and the contact rate (CCR2) can be adjusted by changing the order of mixing the first active material, the second active material, and the conductive material at the time of obtaining the positive electrode slurry for use in forming the active material layer, as well as the mixing ratio, among others. For example, by forming the active material layer by using the positive electrode slurry produced in accordance with the procedure described above in the description of the method of producing a positive electrode slurry, it is possible to adjust the contact rate (CCR1) and the contact rate (CCR2) to the above-mentioned ranges and to satisfy the relationship of the expression (1).

The first active material and the second active material can have the particle form, average particle size, and composition described above in the description of the method of producing a positive electrode slurry. As the conductive material, the conductive material mentioned above in the description of the first conductive material and the second conductive material can be used. As the binder, the binder mentioned above in the description of the first binder and the second binder can be used.

The content ratio between the first active material and the second active material in the active material layer, namely (first active material):(second active material) in weight, is preferably from 70:30 to 30:70, and it may be from 60:40 to 40:60, or from 55:45 to 45:55.

The total content of the first active material and the second active material relative to the total weight of the active material layer may be from 95.0 to 99.9 weight%, or from 96.0 to 99.5 weight%, or from 97.0 to 99.2 weight%, or from 97.5 to 99.0 weight%, or from 98.0 to 98.5 weight%.

The content ratio among the first active material, the second active material, the conductive material, and the binder in the active material layer, namely (first positive electrode active material)+(second positive electrode active material):(conductive material):binder in weight, is preferably (99.9 to 95.0):(0.05 to 2.00):(0.05 to 3.00), and more preferably, it may be (99.9 to 98.0):(0.05 to 1.00):(0.05 to 1.00).

The content of the conductive material relative to the total weight of the active material layer may be from 0.05 to 2.00 weight%, or from 0.10 to 1.50 weight%, or from 0.20 to 1.05 weight%, or from 0.30 to 1.00 weight%, or from 0.50 to 0.95 weight%.

The content of the binder relative to the total weight of the active material layer may be from 0.05 to 3.00 weight%, or from 0.10 to 2.50 weight%, or from 0.20 to 2.00 weight%, or from 0.30 to 1.50 weight%, or from 0.50 to 1.00 weight%.

The positive electrode current collector can be a conductive sheet, and, for example, it is a metal foil sheet that is made by using an aluminum material such as aluminum, aluminum alloy, and the like.

The active material layer can be formed by applying the positive electrode slurry including the first active material, the second active material, a conductive material, a binder, and a dispersion medium to the positive electrode current collector, and performing drying, compression, and/or the like. The thickness of the active material layer may be from 10 to 200 µm, or from 20 to 180 µm, for example. The positive electrode slurry applied to the positive electrode current collector may be compressed so that the thickness falls within the above-mentioned range and the porosity of the active material layer falls within the range of 15 to 40% or within the range of 20 to 35%, for example. The porosity of the active material layer can be determined by mercury porosimetry measurement, or by calculation from a combination of the density of the active material layer and the true density of the solid matter obtained by a gas replacement method, for example, and the porosity herein can be determined by the latter procedure. As the dispersion medium, the dispersion medium mentioned above in the description of the first dispersion medium, the second dispersion medium, and the third dispersion medium can be used. The positive electrode slurry may be the present slurry mentioned above.

The active material layer may be formed directly on the positive electrode current collector, or may be formed on it with another positive electrode active material layer interposed therebetween. On the other surface of the active material layer, namely on the side thereof opposite to the positive electrode current collector, another positive electrode active material layer may be formed.

### (Non-Aqueous Electrolyte Secondary Battery)

A secondary battery has the positive electrode plate mentioned above. The secondary battery can include an electrode assembly including the positive electrode plate, as well as a non-aqueous electrolyte solution, and it may also have a battery case for accommodating the electrode assembly and the non-aqueous electrolyte solution. The battery case may include an exterior package having an opening as well as a sealing plate for sealing the opening. Each of the exterior package and the sealing plate is preferably made of metal, and can be formed by using aluminum, aluminum alloy, iron, iron alloy, or the like. Between the electrode assembly and the exterior package, a resin sheet may be provided as an electrode holder. Alternatively, the battery case may be made of a laminated film. The laminated film has a multilayer structure formed of a metal layer and a resin layer stacked on top of one another, for example. The edges of the laminated film can be stacked and fused together to form a pouch-shaped battery case.

The electrode assembly may include the positive electrode plate mentioned above, a negative electrode plate, and a separator. In the electrode assembly, the positive electrode active material layer of the positive electrode plate faces a negative electrode active material layer of the negative electrode plate, with the separator interposed therebetween. The electrode assembly may be a stack-type one that is formed by stacking the positive electrode plate, the negative electrode plate, and the separator, or may be a wound-type one that is formed by stacking the positive electrode plate having a belt-like shape, a negative electrode plate having a belt-like shape, and a separator having a belt-like shape and winding the resulting stack having a belt-like shape. After the stack is wound, the wound-type electrode assembly may be pressed into a flat shape.

Usually, the negative electrode plate has a negative electrode current collector, as well as a negative electrode active material layer formed on one side or both sides of the negative electrode current collector. The negative electrode current collector is a metal foil sheet that is made by using a copper material such as copper and copper alloy, for example. The negative electrode active material layer includes a negative electrode active material, and it may further include a conductive material, a binder, and the like. The negative electrode active material layer can be formed by applying a negative electrode slurry obtained by adding a dispersion medium (solvent) such as water to the materials that are used for forming the negative electrode active material layer, such as the negative electrode active material, the binder, and the conductive material, to the negative electrode current collector, and performing drying and compression.

As the negative electrode active material, a carbon-based active material such as graphite, as well as one or more selected from the group consisting of Si, SiOx (x=0.5 to 1.5), a composite material of Si and C, and a metal-based active material such as Sn can be used. As the binder, one or more selected from the group consisting of the above-mentioned cellulose-based resin, PAA, and SBR can be used. As the conductive material, the conductive material mentioned above in the description of the first conductive material and the second conductive material can be used.

The separator has a base material, and it may also have a functional layer on at least one side of the base material. The base material can be a porous sheet such as a film or a nonwoven fabric, which is made of a resin such as polyolefin (such as polyethylene and polypropylene), polyester, cellulose, polyamide, and/or the like. The base material may have a monolayer structure or a multilayer structure, and in the multilayer structure, the layers may be made of the same material or different materials. Examples of the functional layer include an adhesive layer made of an adhesive agent and a heat-resistant layer including an inorganic filler, a binder, and the like.

The non-aqueous electrolyte solution is preferably obtained by adding an electrolyte to a non-aqueous solvent such as an organic solvent. As the electrolyte, one or more selected from the group consisting of LiPF₆, LiBF₄, and LiClO₄ can be used. The electrolyte is preferably LiPF₆. The concentration of the electrolyte in the non-aqueous electrolyte solution is preferably from 0.7 to 1.3 mol/L.

As the non-aqueous solvent, an organic solvent such as carbonates, ethers, esters, nitriles, sulfones, lactones, and the like can be used. As the non-aqueous solvent, one or more selected from the group consisting of ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyldifluoromethyl carbonate (F-DMC), and trifluorodimethyl carbonate (TFDMC) can be used, for example.

The non-aqueous electrolyte solution may include various additives including a gas generation agent such as biphenyl (BP), cyclohexylbenzene (CHB), and/or the like; a film-forming agent such as an oxalato complex compound containing a boron atom and/or a phosphorus atom, vinylene carbonate (VC), and/or the like; a dispersant; a thickener; and/or the like.

### [Examples]

In the following, the present disclosure will be described in further detail by way of Examples and Comparative Examples.

### [Preparation of Materials]

### (First Active Material (First Positive Electrode Active Material))

As a first active material, lithium composite oxide particles in the form of secondary particles each consisting of 50 or more primary particles aggregated together were prepared. The composition of the lithium composite oxide particles was within the range shown by the above-mentioned formula (II).

### (Second Active Material (Second Positive Electrode Active Material))

As a second active material, lithium composite oxide particles in the form of single particles or in the form of secondary particles each consisting of 2 to 10 primary particles aggregated together were prepared. The composition of the lithium composite oxide particles was within the range shown by the above-mentioned formula (II).

### (First Conductive Material and Second Conductive Material)

As a first conductive material and a second conductive material, a first conductive material dispersion and a second conductive material dispersion prepared by dispersing carbon nanotubes (CNTs) in N-methyl-2-pyrrolidone (NMP) were prepared.

### (First Binder and Second Binder)

As a first binder and a second binder, polyvinylidene difluoride (PVdF) was prepared.

### (First Dispersion Medium and Second Dispersion Medium)

As a first dispersion medium and a second dispersion medium, N-methyl-2-pyrrolidone (NMP) was prepared.

### [Comparative Example 1 and Reference Example 1]

### (Preparation of Positive Electrode Slurry)

The first active material, the second active material, PVdF, and NMP were kneaded to prepare a kneaded product (c1). To the kneaded product (c1), a CNT dispersion prepared by dispersing CNTs in NMP was added and kneaded to prepare a positive electrode slurry. For producing the positive electrode slurry, the materials were mixed in the mixing ratio specified in Table 1. The content of the conductive material given in Table 1 refers to the content of the conductive material in the conductive material dispersion.

### (Preparation of Positive Electrode Plate)

The positive electrode slurry obtained in the above manner was applied to an Al foil sheet as a positive electrode current collector, and dried and compressed to form a positive electrode active material layer, followed by cutting into a certain size to prepare a positive electrode plate.

### [Comparative Examples 2 and 3, Examples 1 and 2]

### (Preparation of Positive Electrode Slurry)

The first active material, the first binder, and the first dispersion medium were kneaded to prepare a first kneaded product (a step (a)), and the first kneaded product and the first conductive material dispersion were kneaded to prepare a second kneaded product (a step (b)). The second active material, the second binder, and the second dispersion medium were kneaded to prepare a third kneaded product (a step (c)). The second kneaded product, the third kneaded product, and the second conductive material dispersion were kneaded (a step (d)) to prepare a positive electrode slurry. For producing the positive electrode slurry, the materials were mixed in the mixing ratio specified in Table 1. The content of the conductive material given in Table 1 refers to the total content of the first conductive material in the first conductive material dispersion and the second conductive material in the second conductive material dispersion.

### (Preparation of Positive Electrode Plate)

Except that the positive electrode slurry obtained in the above manner was used, the procedure described above for Comparative Example 1 was employed to prepare a positive electrode plate.

### [Comparative Examples 4 and 5, Examples 3 and 4]

### (Preparation of Positive Electrode Slurry)

The first active material, the first binder, and the first dispersion medium were kneaded to prepare a first kneaded product (a step (a)), and the first kneaded product and the first conductive material dispersion were kneaded to prepare a second kneaded product (a step (b)). The second active material, the second binder, and the second dispersion medium were kneaded to prepare a third kneaded product (a step (c)), and the third kneaded product and the second conductive material dispersion were kneaded to prepare a fourth kneaded product (a step (e)). The second kneaded product and the fourth kneaded product were kneaded (a step (f)) to prepare a positive electrode slurry. For producing the positive electrode slurry, the materials were mixed in the mixing ratio specified in Table 2. The content of the conductive material given in Table 2 refers to the total content of the first conductive material in the first conductive material dispersion and the second conductive material in the second conductive material dispersion.

### (Preparation of Positive Electrode Plate)

Except that the positive electrode slurry obtained in the above manner was used, the procedure described above for Comparative Example 1 was employed to prepare a positive electrode plate.

### [Determination of Contact Rate (CCR1) and Contact Rate (CCR2)]

The positive electrode plate obtained in the above manner (the positive electrode plate that was cut as needed into a proper size) was embedded in resin. By a cross section polisher (CP) method, a cross section of the resin-embedded positive electrode plate was formed. With a scanning electron microscope (SEM), an SEM image of the cross section was obtained, and with a scanning spreading resistance microscope (SSRM), the spreading resistance of the cross section was measured. A comparison was made between the SEM image and the resistance distribution obtained from the measurement of the spreading resistance, to differentiate the regions of the first active material, the second active material, the conductive material, and pores in the SEM image. In the SEM image where the respective regions were differentiated, as for each particle of the first active material, the ratio of the total length of a portion at which the first active material was in contact with the conductive material relative to the length of the outer circumference of the first active material, namely (total length of contact portion)/(total length of outer circumference), was calculated, and the average value was regarded as the contact rate (CCR1). Similarly, in the SEM image where the respective regions were differentiated, as for each particle of the second active material, the ratio of the total length of a portion at which the second active material was in contact with the conductive material relative to the length of the outer circumference of the second active material, namely (total length of contact portion)/(total length of outer circumference), was calculated, and the average value was regarded as the contact rate (CCR2). Results are given in Table 1 and Table 2.

### [Calculation of Capacity Retention of Test Cell (Non-Aqueous Electrolyte Secondary Battery)]

### (Preparation of Negative Electrode)

Graphite as a negative electrode active material, carboxymethylcellulose (CMC) and styrene-butadiene rubber (SBR) as binders, and water as a dispersion medium were prepared. 98 parts by weight of graphite, 1 part by weight of CMC, 1 part by weight of SBR, and a certain amount of water were mixed to prepare a negative electrode slurry. The negative electrode slurry was applied to a Cu foil sheet as a negative electrode current collector, and dried and compressed to form a negative electrode active material layer, followed by cutting into a certain size to prepare a negative electrode plate.

### (Preparation of Test Cell)

A tab terminal was bonded to the positive electrode plate obtained in the above manner, and a tab terminal was bonded to the negative electrode plate obtained in the above manner. As a separator, a porous sheet made of polyolefin was prepared. The positive electrode plate having a tab terminal bonded thereto and the negative electrode plate having a tab terminal bonded thereto were stacked on top of one another with the separator interposed between the positive electrode active material layer and the negative electrode active material layer, and thus an electrode assembly was prepared. Into a pouch made of a laminated film which was formed by stacking an aluminum layer and a resin layer, the electrode assembly was inserted, and electrolyte solution was injected into it, followed by hermetically sealing the pouch, and thus a test cell was obtained.

### (Calculation of Capacity Retention)

Under conditions at a temperature of 25°C, initial charging and discharging of the test cell was carried out. Then, at an electric current of 0.1 C, until the electric potential of the positive electrode reached 4.2 V (vs. Li⁺/Li), the test cell was charged in a constant-current mode. Then, until the electric current reached 0.05 C, the test cell was charged in a constant-voltage mode. Thus, charging was completed. After a rest for 10 minutes, the test cell was discharged in a constant-current mode at an electric current of 1.0 C until the electric potential of the positive electrode reached 3.0 V (vs. Li⁺/Li), and the discharged capacity at this time was measured, which was regarded as the initial discharged capacity.

Then, under conditions at a temperature of 25°C, the test cell was charged in a constant-current mode at an electric current of 0.5 C until 4.2 V was reached, and then discharged in a constant-current mode at an electric current of 0.5 C until 3.0 V was reached, and this charge-discharge cycle was repeated 200 times. Subsequently, discharged capacity was measured by the above-mentioned procedure, and the resultant was regarded as the post-cycle-test discharged capacity. By the equation below, capacity retention was calculated. Results are given in Table 1 and Table 2. 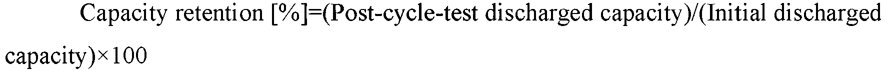 Capacity retention [%]=(Post-cycle-test discharged capacity)/(Initial discharged capacity)×100

### [Measurement of Amount of Heat Produced upon Nail Penetration]

The test cell obtained in the above manner was fully charged. The test cell thus fully charged was connected in parallel to a constant-voltage power source with a maximum current of 200 A for simulating a current flowing in a large cell, and a nail was inserted into the test cell. The total amount [J] of heat produced over a time period of 2 seconds starting from the moment of detection of a voltage drop, indicative of the occurrence of a short circuit caused by the nail insertion, was calculated, and a relative amount of heat relative to the amount of heat produced in the test cell of Comparative Example 1 (which was defined as 100) was calculated. Results are given in Table 1 and Table 2.

**[Table 1]**

| | | Unit | Comp. Ex. | Ref. Ex. | Comp. Ex. | Ex. | Ex. | Comp. Ex. |
|---|---|---|---|---|---|---|---|---|
| | | | 1 | 1 | 2 | 1 | 2 | 3 |
| Production of positive electrode plate | Second conductive material kneading step | | - | - | (d) | (d) | (d) | (d) |
| | First positive electrode active material | parts by weight | 49.2 | 49.2 | 49.2 | 49.2 | 49.2 | 49.2 |
| | Second positive electrode active material | parts by weight | 49.2 | 49.2 | 49.2 | 49.2 | 49.2 | 49.2 |
| | Conductive material* | parts by weight | 0.8 | 1.1 | 0.8 | 0.8 | 0.8 | 0.8 |
| | Binder** | parts by weight | 0.8 | 0.8 | 0.8 | 0.8 | 0.8 | 0.8 |
| | Dispersion medium*** | parts by weight | 25 | 25 | 25 | 25 | 25 | 25 |
| | First conductive material/ second conductive material (in weight) | - | - | - | 40/60 | 50/50 | 60/40 | 70/30 |
| | First binder/ second binder (in weight) | - | - | - | 40/60 | 50/50 | 60/40 | 70/30 |
| Evaluation of positive electrode plate | CCR1 | - | 0.50 | 0.63 | 0.43 | 0.54 | 0.63 | 0.68 |
| | CCR2 | - | 0.41 | 0.52 | 0.44 | 0.31 | 0.30 | 0.27 |
| | CCR2/CCR1 | - | 0.81 | 0.82 | 1.02 | 0.57 | 0.48 | 0.40 |
| Evaluation of secondary battery | Capacity retention | % | 88.9 | 91.7 | 88.2 | 89.6 | 92.0 | 87.7 |
| | Amount of heat produced upon nail penetration (relative value) | - | 100 | 161 | 100 | 100 | 99 | 100 |

| | | | | | | | | |
|---|---|---|---|---|---|---|---|---|
| *: Total amount when the first conductive material and the second conductive material are included. **: Total amount when the first binder and the second binder are included. ***: Total amount of the dispersion medium in the positive electrode slurry. | | | | | | | | |

**[Table 2]**

| | | Unit | Comp. Ex. | Ex. | Ex. | Comp. Ex. |
|---|---|---|---|---|---|---|
| | | | 4 | 3 | 4 | 5 |
| Production of positive electrode plate | Second conductive material kneading step | | (e) | (e) | (e) | (e) |
| | First positive electrode active material | parts by weight | 49.2 | 49.2 | 49.2 | 49.2 |
| | Second positive electrode active material | parts by weight | 49.2 | 49.2 | 49.2 | 49.2 |
| | Conductive material* | parts by weight | 0.8 | 0.8 | 0.8 | 0.8 |
| | Binder** | parts by weight | 0.8 | 0.8 | 0.8 | 0.8 |
| | Dispersion medium*** | parts by weight | 25 | 25 | 25 | 25 |
| | First conductive material/ second conductive material (in weight) | - | 40/60 | 50/50 | 60/40 | 70/30 |
| | First binder/second binder (in weight) | - | 40/60 | 50/50 | 60/40 | 70/30 |
| Evaluation of positive electrode plate | CCR1 | - | 0.42 | 0.53 | 0.63 | 0.67 |
| | CCR2 | - | 0.45 | 0.32 | 0.29 | 0.28 |
| | CCR2/CCR1 | - | 1.07 | 0.60 | 0.46 | 0.42 |
| Evaluation of secondary battery | Capacity retention | % | 88.5 | 89.7 | 93.0 | 87.9 |
| | Amount of heat produced upon nail penetration (relative value) | - | 100 | 100 | 100 | 101 |

| | | | | | | |
|---|---|---|---|---|---|---|
| *: Total amount when the first conductive material and the second conductive material are included. **: Total amount when the first binder and the second binder are included. ***: Total amount of the dispersion medium in the positive electrode slurry. | | | | | | |

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A method of producing a positive electrode slurry for a non-aqueous electrolyte secondary battery, wherein
the positive electrode slurry includes lithium composite oxide particles as a first positive electrode active material and lithium composite oxide particles as a second positive electrode active material,
the first positive electrode active material is in a form of secondary particles each consisting of 50 or more primary particles aggregated together,
the second positive electrode active material is in a form of single particles, or in a form of secondary particles each consisting of 2 to 10 primary particles aggregated together,
the method comprising:
(a) kneading the first positive electrode active material, a first binder, and a first dispersion medium to obtain a first kneaded product;
(b) kneading the first kneaded product and a first conductive material to obtain a second kneaded product;
(c) kneading the second positive electrode active material, a second binder, and a second dispersion medium to obtain a third kneaded product; and
either [i] or [ii] below:
[i] (d) kneading the second kneaded product, the third kneaded product, and a second conductive material; or
[ii] (e) kneading the third kneaded product and the second conductive material to obtain a fourth kneaded product and (f) kneading the second kneaded product and the fourth kneaded product, and
in the method, the first conductive material and the second conductive material are mixed in a weight ratio of (the first conductive material):(the second conductive material)=45:55 to 65:35.

2. The method of producing a positive electrode slurry according to claim 1, wherein in the method, the first positive electrode active material and the second positive electrode active material are mixed in a weight ratio of (the first positive electrode active material):(the second positive electrode active material)=70:30 to 30:70.

3. The method of producing a positive electrode slurry according to claim 1 or 2, wherein an average particle size (D50) of the first positive electrode active material is more than an average particle size (D50) of the second positive electrode active material.

4. The method of producing a positive electrode slurry according to any one of claims 1 to 3, wherein each of the first positive electrode active material and the second positive electrode active material is independently a lithium composite oxide represented by a formula (I) below:
Li_{1.00+a1}Niₓ₁Me_{1.00-x1}O₂ (I)
where
a1 and x1 satisfy relationships of -0.30≤a1≤0.30 and 0.30≤x1≤1.00, respectively; and
Me represents one or more selected from the group consisting of Co, Mn, Al, Zr, B, Mg, Fe, Cu, Zn, Sn, Na, K, Ba, Sr, Ca, W, Mo, Nb, Ti, Si, V, Cr, and Ge.

5. A positive electrode plate comprising:
a positive electrode current collector; and
a positive electrode active material layer, wherein
the positive electrode active material layer includes a first positive electrode active material, a second positive electrode active material, a conductive material, and a binder,
each of the first positive electrode active material and the second positive electrode active material is lithium composite oxide particles,
the first positive electrode active material is in a form of secondary particles each consisting of 50 or more primary particles aggregated together,
the second positive electrode active material is in a form of single particles, or in a form of secondary particles each consisting of 2 to 10 primary particles aggregated together, and
in a cross section of the positive electrode active material layer, a contact rate (CCR1) between the first positive electrode active material and the conductive material and a contact rate (CCR2) between the second positive electrode active material and the conductive material satisfy a relationship of an expression (1) below. $0.43 \leq CCR 2 / CCR 1 \leq 0.70$ (1)

6. The positive electrode plate according to claim 5, wherein the contact rate (CCR1) is from 0.49 to 0.65.

7. The positive electrode plate according to claim 5 or 6, wherein the contact rate (CCR2) is from 0.28 to 0.35.

8. The positive electrode plate according to any one of claims 5 to 7, wherein the positive electrode active material layer includes the first positive electrode active material and the second positive electrode active material in a weight ratio of (the first positive electrode active material):(the second positive electrode active material)=70:30 to 30:70.

9. The positive electrode plate according to any one of claims 5 to 8, wherein an average particle size (D50) of the first positive electrode active material is more than an average particle size (D50) of the second positive electrode active material.

10. The positive electrode plate according to any one of claims 5 to 9, wherein the positive electrode active material layer includes the first positive electrode active material, the second positive electrode active material, the conductive material, and the binder in a weight ratio of (the first positive electrode active material)+(the second positive electrode active material):(the conductive material):(the binder)=(99.9 to 95.0):(0.05 to 2.00):(0.05 to 3.00).

11. The positive electrode plate according to any one of claims 5 to 10, wherein each of the first positive electrode active material and the second positive electrode active material is independently a lithium composite oxide represented by a formula (I) below:
Li_{1.00+a1}Niₓ₁Me_{1.00-x1}O₂ (I)
where
a1 and x1 satisfy relationships of -0.30≤a1≤0.30 and 0.30≤x1≤1.00, respectively; and
Me represents one or more selected from the group consisting of Co, Mn, Al, Zr, B, Mg, Fe, Cu, Zn, Sn, Na, K, Ba, Sr, Ca, W, Mo, Nb, Ti, Si, V, Cr, and Ge.
